# EUROPÄISCHE PATENTANMELDUNG

(11) **EP 4 642 004 A1**
(43) Veröffentlichungstag der Anmeldung: **29.10.2025**
(21) Anmeldenummer: 24172338.6
(22) Anmeldetag: 25.04.2024
(51) Int. Cl.: H04L 47/27, H04W 76/28, H04W 52/02, H04L 47/193, H04W 4/70, H04W 80/06

(54) **VERFAHREN ZUM BETREIBEN EINES STÖRUNGSRESISTENTEN NETZWERKS ZWISCHEN EINER ELEKTRONISCHEN RECHENEINRICHTUNG UND EINEM ENDGERÄT MITTELS EINES NETZWERKSYSTEMS, COMPUTERPROGRAMMPRODUKT, COMPUTERLESBARES SPEICHERMEDIUM SOWIE NETZWERKSYSTEM**

(71) Anmelder: Siemens Aktiengesellschaft, 80333 München (DE)
(72) Erfinder: Müller, Kilian, 91054 Erlangen (DE)
(74) Vertreter: Siemens Patent Attorneys

(57) **Zusammenfassung**

Verfahren zum Betreiben eines störungsresistenten Netzwerks zwischen einer elektronischen Recheneinrichtung und einem Endgerät mittels eines Netzwerksystems, Computerprogrammprodukt, computerlesbares Speichermedium sowie Netzwerksystem

Verfahren zum Betreiben eines störungsresistenten Netzwerks (16), mit den Schritten: Übertragen von Datenpaketen (18) von dem Endgerät (12) zu einer elektronischen Recheneinrichtung (14), wobei einem jeden Datenpaket (18) ein jeweiliger Zeitstempel (20) und eine jeweilige Paketnummer (22) mittels des Endgeräts (12) zugeordnet wird; Empfangen zumindest eines Teils der Vielzahl von übertragenen Datenpaketen (18); Ermitteln von nicht-empfangenen Datenpaketen (18) auf Basis der jeweiligen Paketnummer (22); Ermitteln von zumindest einem Zeitfenster (24), in welchem die nicht-empfangenen Datenpakte (18) gesendet wurden, auf Basis der Zeitstempel (20) der empfangenen Datenpakete (18); Erzeugen einer Informationsnachricht (26) mit dem zumindest einem ermittelten Zeitfenster (24); und Übertragen der der Informationsnachricht (26) an das Endgerät (12) für ein zukünftiges Übertragen von Datenpaketen (18) über das störungsresistente Netzwerk (16). Ferner betrifft die Erfindung ein Computerprogrammprodukt, ein computerlesbares Speichermedium sowie ein Netzwerksystem (10).

## Beschreibung

Verfahren zum Betreiben eines störungsresistenten Netzwerks zwischen einer elektronischen Recheneinrichtung und einem Endgerät mittels eines Netzwerksystems, Computerprogrammprodukt, computerlesbares Speichermedium sowie Netzwerksystem

Die nachfolgende Erfindung betrifft ein Verfahren zum Betreiben eines störungsresistenten Netzwerksystems zwischen einer elektronischen Recheneinrichtung und einem Endgerät mittels eines Netzwerksystems gemäß dem geltenden Patentanspruch 1. Ferner betrifft die Erfindung ein entsprechendes Computerprogrammprodukt, ein computerlesbares Speichermedium sowie ein entsprechendes Netzwerksystem.

Insbesondere so genannte störungsresistente Netze oder auch störungstolerante Netze (Disruption-Tolerant Networks - DTN), welche auch als verzögerungstolerante Netze bezeichnet werden, stellen eine Klasse von Kommunikationsnetzen dar, die mit Blick auf unzuverlässige und stark unterbrochene Konnektivität entwickelt und konzipiert sind. Ein Beispiel hierfür sind mobile Ad-hoc-Netze, lokale Netze für die Katastrophenhilfe, Satellitenkommunikationsszenarien oder dergleichen. Diese Netze tolerieren hohe Latenzzeiten und häufige Verbindungsabbrüche und sind oft stark partitioniert. Außerdem besteht möglicherweise zu keinem Zeitpunkt eine direkte Verbindung zwischen Sender und Empfänger. Bei vielen Anwendungen, insbesondere bei kontinuierlichen Fernmessungsaufgaben, müssen stark eingeschränkte Endgeräte, insbesondere so genannte Internet of Things-Geräte (loT) von Zeit zu Zeit aufgezeichnete Werte an den Netzwerkrand zurückmelden, um zu vermeiden, dass ihnen der interne Speicher ausgeht und aus anderen Gründen der Dienstgüte, zum Beispiel eine zeitliche Abfolge der Daten. Wenn ihnen der Speicher ausgeht, müssen die Zeitreihenwerte verworfen werden. Diese Werte gehen dann verloren, und die verbundene Zeitreihe wird oft als ungültig betrachtet, wenn Stichproben fehlen.

Ein weiteres Problem besteht darin, dass diese Netze in der Regel eine Technik namens "Store and Forward" für die Datenübertragung verwenden, bei denen so genannte Knoten (Nodes) eingehende Pakete zwischenspeichern und sie an den nächsten Netzknoten weitergeben, sobald eine neue Verbindung hergestellt wird. Wenn ein Knoten nicht mehr Pakete speichern kann, besteht eine gängige Technik darin, zum Beispiel die ältesten Pakete aus dem Cache zu entfernen. Dies kann jedoch dazu führen, dass Pakete immer verloren gehen.

Insgesamt ist es wichtig, mit diesen Netzen vorsichtig umzugehen, insbesondere als Sender. Eine ständige Überflutung dieser Netze mit Paketen ist daher keine vorteilhafte Lösung.

Aus Sicht der loT-Geräte (insbesondere der industriellen loT-Geräte - IIoT) und des Netzwerkrandes ist es daher von großem Interesse abzuschätzen, wann das nächste Mal Datenpakete gesendet und empfangen werden können, damit diese zum Beispiel ihr oft stromhungriges Modem abschalten und Energie sparen können. Dies ist besonders wichtig, wenn das loT-Gerät mit nicht wieder aufladbaren Batterien betrieben wird.

Im Stand der Technik wurden ähnliche Probleme auf die folgende Art und Weise gelöst. Wenn die Netzarchitektur bekannt ist, zum Beispiel Datenverbindungen via Satellit, können einfache Prädiktoren auf der Grundlage von aufgezeichneten Daten, Echtzeit- und Trajektoriendaten erstellt werden, die dann zur Schätzung des nächsten Verbindungsfensters verwendet werden können. Auch öffentlich verfügbare Daten, beispielsweise Zugfahrpläne, können verwendet werden, um die nächste Ankunft eines Datenmules, in diesem Fall dem Zug, abzuschätzen. Außerdem gibt es bereits probabilistische Modelle, die die Verfügbarkeit, und insbesondere auch eine Position, eines Empfängers zu einem bestimmten Zeitpunkt abschätzen.

Aufgabe der vorliegenden Erfindung ist es, ein Verfahren, ein Computerprogrammprodukt, ein computerlesbares Speichermedium sowie ein Netzwerksystem zu schaffen, mittels welchen ein verbesserter Betrieb eines störungsresistenten Netzwerks zwischen einer elektronischen Recheneinrichtung und einem Endgerät realisiert werden kann.

Diese Aufgabe wird durch ein Verfahren, ein Computerprogrammprodukt, ein computerlesbares Speichermedium sowie ein Netzwerksystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines störungsresistenten Netzwerks zwischen einer elektronischen Recheneinrichtung und einem Endgerät mittels eines Netzwerksystems. Es erfolgt das Übertragen einer Vielzahl von Datenpaketen von dem Endgerät zu der elektronischen Recheneinrichtung über das störungsresistente Netzwerk, wobei einem jeden Datenpaket ein jeweiliger Zeitstempel und eine jeweilige Paketnummer mittels des Endgeräts zugeordnet werden. Es wird zumindest ein Teil der Vielzahl von übertragenen Datenpaketen mittels der elektronischen Recheneinrichtung empfangen. Es werden nicht-empfangene Datenpakete auf Basis der jeweiligen Paketnummer mittels der elektronischen Recheneinrichtung ermittelt. Es wird zumindest ein Zeitfenster ermittelt, in welchem die nicht-empfangenen Datenpakete gesendet werden, auf Basis der Zeitstempel der empfangenen Datenpakete mittels der elektronischen Recheneinrichtung. Es erfolgt das Erzeugen einer Informationsnachricht mit dem zumindest ermittelten Zeitfenster mittels der elektronischen Recheneinrichtung und das Übertragen der Informationsnachricht an das Endgerät für ein zukünftiges Übertragen von Datenpaketen über das störungsresistente Netzwerk mittels der elektronischen Recheneinrichtung.

Somit kann insbesondere ein verbesserter Betrieb des störungsresistenten Netzwerks realisiert werden, da beispielsweise zukünftig vorhergesagt werden kann, wann ein Übertragen von Datenpaketen sinnvoll ist. Insbesondere erfolgt somit eine Prädiktion von Zeitfenstern, an welchen das Endgerät Datenpakete zuverlässig an die elektronische Recheneinrichtung übertragen kann.

Insbesondere beschreibt somit die Erfindung das loT-Gerät, insbesondere das Endgerät, und eine entsprechende Dienstdistanz am Netzwerkrand (Network Edge). Diese eingeschränkten Geräte sind über ein Black-Box-Netz, insbesondere dem Netzwerksystem, mit dem Dienst an der Network Edge verbunden. Diese Verbindung ist in hohem Maße intermittierend und zu keinem Zeitpunkt kann insbesondere eine direkte Verbindung zwischen dem eingeschränkten Endgerät und dem Netzwerkrand bestehen, zum Beispiel verzögerungs-/unterbrechungstolerante Netzwerke. Durch die "Black-Box-Streuktur" des Netzwerksystems innerhalb des Netzwerks ist ein Vorhersageansatz mit fast allen Arten von Netzinfrastrukturen kompatibel.

Bei dem vorgeschlagenen Ansatz verwendet das Endgerät insbesondere so genannte Nachschlagetabellen (Lookup-Tables), die durch die elektronische Recheneinrichtung an der Network Edge mit Hilfe von mathematischen Modellen erstellt werden beziehungsweise erstellt wurden. Diese Nachschlagetabellen enthalten die nächsten geschätzten Starts von Verbindungsfenstern sowie deren Dauer. Dieser Vorhersageansatz ist insbesondere kompatibel mit eingeschränkten Endgeräten, da die gesamte Rechenarbeit in den Datenzentren am Netzrand, insbesondere der elektronischen Recheneinrichtung oder im Netzkern geleistet wird.

Insbesondere ist bei der vorliegenden Erfindung somit vorgesehen, dass ein entferntes loT-Gerät über ein intermittierendes Netzwerk (Datenmules, Subcom, Katastrophenschutznetzwerk, eine Kombination aus allen oder dergleichen) mit einem Dienst am Netzwerkrand, insbesondere mit der elektronischen Recheneinrichtung, verbunden ist. Wie bereits erwähnt wird das Netzwerk als so genannte Black-Box behandelt. Der Einfachheit halber wird in diesem Setup nur ein loT-Gerät gewählt. Aber natürlich ist dieser Ansatz auch ebenfalls mit einer Vielzahl von weiteren Endgeräten skalierbar.

In einem ersten Schritt versucht, das jeweilige Endgerät in regelmäßigen Abständen Daten über das Netzwerk abzuladen und sendet daher Datenpakete an die elektronische Recheneinrichtung. Diese Datenpakete werden zusätzlich mit einem Zeitstempel versehen, der insbesondere den lokalen Sendezeitpunkt des Pakets beschreibt. Außerdem wird, falls nicht anders vorhanden, eine inkrementelle Paket-ID, insbesondere die Paketnummer, an diese angehängt. Diese Paket-ID wird für jedes Paket, das vom Endgerät an die elektronische Recheneinrichtung gesendet wird, inkrementiert.

Da die Verbindung zwischen dem Gerät und dem Dienst am Netzwerkrand nur sporadisch besteht, werden einige Datenpakete ankommen, andere nicht. Alle angekommenen Paketnummern werden gespeichert und auf der Seite der elektronischen Recheneinrichtung wird eine so genannte Fensterkarte (Window Map) erstellt. Diese Fensterkarte stellt die Intervalle dar, in denen es dem Endgerät es möglich war, erfolgreich Datenpakete an die elektronische Recheneinrichtung zu senden.

Aufgrund der oft asynchronen Natur von unterbrechungstoleranten Netzwerken bedeutet eine Verbindung jedoch von dem Endgerät zur elektronischen Recheneinrichtung nicht automatisch, dass zu diesem Zeitpunkt auch eine Verbindung von der elektronischen Recheneinrichtung zum Endgerät Bestand hatte.

Im nächsten Schritt kann insbesondere die elektronische Recheneinrichtung auf Basis der Vielzahl von Verbindungsdatensätzen trainiert werden, um die nächsten Offline-Online-Fenster vorherzusagen. Diese vorhergesagten Fenster werden dann in einem Lookup Table gespeichert, die an das Endgerät übertragen wird. Das Endgerät kann nun diese Nachschlagtabelle verwenden, um zukünftig Daten nur dann zu senden, wenn eine hohe Wahrscheinlichkeit besteht, dass der Netzdienst diese Pakete erhält.

Dabei sei an dieser klargestellt, dass die nicht-empfangenen Datenpakete Teil von den zu übertragenden beziehungsweise den übertragenen Datenpaketen sind, und dass das Nicht-Empfangen somit auf einem Fehler der Übertragung beruht. Somit werden die nicht-empfangenen Datenpakete zwar übertragen, jedoch aufgrund des Fehlers nicht empfangen. Es ist dabei wünschenswert, dass jedoch alle übertragenen Datenpakete auch empfangen werden. Gemäß einer vorteilhaften Ausgestaltungsform werden zukünftige Datenpakete von dem Endgerät zur elektronischen Recheneinrichtung in dem ermittelten Zeitfenster übertragen. Insbesondere werden nur in dem ermittelten Zeitfenster die Datenpakete zukünftig übertragen. Dies hat insbesondere den Vorteil, dass bereits auf der Basis des ermittelten Zeitfensters somit sichergestellt werden kann, dass eine hohe Wahrscheinlichkeit herrscht, dass Datenpakete von dem Endgerät an die elektronische Recheneinrichtung übertragen werden können. Somit kann verhindert werden, dass insbesondere Datenpakete verloren gehen und beispielsweise kann ebenfalls sichergestellt werden, dass energieintensive Übermittlungsversuche von dem Endgerät zur elektronischen Recheneinrichtung durchgeführt werden. Dies verbessert den Betrieb des störungsresistenten Netzwerks.

Weiterhin vorteilhaft ist, wenn die Informationsnachricht mit einer Übersichtstabelle über das zumindest eine ermittelte Zeitfenster übertragen wird. Die Übersichtstabelle entspricht insbesondere der Nachschlagetabelle, insbesondere der so genannten Lookup Table. Bei der Übersichtstabelle handelt es sich um eine einfache und insbesondere aufwandsreduzierte Tabelle, welche insbesondere von dem Endgerät einfach abgearbeitet werden kann. Dabei ist insbesondere kein hoher Rechenkapazitätseinsatz vom Endgerät notwendig, so dass auch insbesondere bei sehr einfachen Endgeräten vorteilhaft das Verfahren durchgeführt werden kann.

In einer weiteren vorteilhaften Ausgestaltungsform ist vorgesehen, dass die elektronische Recheneinrichtung kontinuierlich Zeitfenster ermittelt und die Informationsnachricht kontinuierlich beziehungsweise in vorgegebenen Zeitintervallen angepasst und an das Endgerät übertragen wird. Mit anderen Worten kann die elektronische Recheneinrichtung im Wesentlichen lernfähig bereitgestellt werden, und über die Zeit hinweg die Übersichtstabelle entsprechend anpassen. Die ermöglicht insbesondere, dass auch zukünftige Zeitfenster mitberücksichtigt werden können, so dass eine verbesserte Anpassung des Zeitfensters durchgeführt werden kann, welches zum verbesserten Betrieb des störungsresistenten Netzwerks führt.

Es hat sich weiter als vorteilhaft erwiesen, wenn die Informationsnachricht mittels eines lernfähigen Algorithmus der elektronischen Recheneinrichtung erzeugt wird. Mit anderen Worten kann der lernfähige Algorithmus in einem ersten Schritt eine erste Informationsnachricht erzeugen und an das Endgerät übermitteln. Über die Zeit hinweg, insbesondere auf Basis von weiteren empfangenen Datenpaketen, kann diese Informationsnachricht beziehungsweise eine entsprechende Übersichtstabelle zuverlässig kontinuierlich angepasst werden, insbesondere über einen lernfähigen Algorithmus. Insbesondere dienen somit die übermittelten Datenpakete als Trainingsdaten, um zuverlässig das zumindest eine Zeitfenster beziehungsweise auch eine Vielzahl an Zeitfenstern zu ermitteln, wann ein Übertragen sinnvoll ist.

Es hat sich weiterhin als vorteilhaft erwiesen, wenn der lernfähige Algorithmus als neuronales Netzwerk bereitgestellt wird. Insbesondere kann somit auf einfache Art und Weise und dennoch zuverlässig die Informationsnachricht und insbesondere die Übersichtstabelle entsprechend erzeugt werden. Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Dabei hat sich weiter als vorteilhaft erwiesen, wenn das neuronale Netzwerk als Long-Short-Term-Memory-Algorithmus bereitgestellt wird. Bei dem Long-Short-Term-Memory-Netzwerk beziehungsweise Algorithmus handelt es sich um eine künstliche Intelligenz mit einem so genannten Eingangstor (Input Gate), ein Merk- und Vergesstor (Forget Gate) und ein Ausgangstor (Output Gate). Auf diese Weise kann im Gegensatz zu herkömmlichen rekurrenten neuronalen Netzwerken eine Art Erinnerung an frühere Erfahrungen bereitgestellt werden. Insbesondere wird somit ein "Kurzzeitgedächtnis" bereitgestellt, das lange anhält, weil das prinzipielle Verhalten des Netzes in den Gewichten codiert ist. Somit kann ein verbesserter Betrieb des störungsresistenten Netzwerks bereitgestellt werden.

Weiterhin vorteilhaft ist, wenn in Abhängigkeit von dem bestimmten Zeitfenster eine Kommunikationseinrichtung des Endgeräts deaktiviert wird. Mit anderen Worten ist vorgesehen, dass ein so genanntes Modem des Endgeräts nur dann eingeschaltet wird, wenn dies dem entsprechenden Zeitfenster in der Übersichtstabelle entspricht. Zu den anderen Zeiten wird wiederum das Modem entsprechend deaktiviert. Insbesondere, da Modems viel Energie benötigen und beispielsweise die Endgeräte lediglich Batterien aufweisen, welche getauscht werden müssen, kann somit zuverlässig eine Betriebszeit des Endgeräts verlängert werden.

In einer weiteren vorteilhaften Ausgestaltungsform ist vorgesehen, dass eine weitere Vielzahl von weiteren Datenpaketen von der elektronischen Recheneinrichtung an das Endgerät über das störungsresistente Netzwerk übertragen wird, wobei einem jeden weiteren Datenpaket ein jeweiliger weiterer Zeitstempel und eine jeweilige weitere Paketnummer mittels der elektronischen Recheneinrichtung zugeordnet wird, wobei zumindest ein Teil der Vielzahl von übertragenen weiteren Datenpaketen mittels des Endgeräts empfangen wird, wobei nicht-empfangene weitere Datenpakete auf Basis der jeweiligen weiteren Paketnummer mittels des Endgeräts ermittelt werden, und wobei zumindest ein weiteres Zeitfenster, in welchen die nicht-empfangenen weiteren Datenpakete gesendet werden, auf Basis der weiteren Zeitstempel der empfangenen weiteren Datenpakete mittels des Endgeräts ermittelt werden. Mit anderen Worten kann auch bestimmt werden, wann eine Kommunikationszeit beziehungsweise ein Kommunikationskanal von der elektronischen Recheneinrichtung zum Endgerät bereitgestellt werden konnte. Somit ist es auch möglich, dass die elektronische Recheneinrichtung weiß, wann diese Datenpakete zu senden hat, ohne dass es zu einem Verlust kommt. Des Weiteren ist es dadurch ermöglicht, dass beispielsweise auch das Endgerät lediglich zu diesen Zeitpunkten einen Empfangskanal öffnet, wodurch ebenfalls weiterhin elektrische Energie gespart werden kann.

Bevorzugt ist hierbei jedoch vorgesehen, da insbesondere das Endgerät beispielsweise nicht genügend Rechenressourcen zur Verfügung hat, dass die Bestimmung einer solchen Übersichtstabelle entsprechend ebenfalls durch die elektronische Recheneinrichtung durchgeführt wird. Daher ist insbesondere vorgesehen, dass lediglich die entsprechenden weiteren Zeitfenster an die elektronische Recheneinrichtung übermittelt werden, und die elektronische Recheneinrichtung wiederum auf Basis der weiteren Zeitfenster eine entsprechende Übersichtstabelle erstellen kann.

Ebenfalls vorteilhaft ist, wenn das zumindest eine weitere Zeitfenster von dem Endgerät an die elektronische Recheneinrichtung übertragen wird und auf Basis dessen von der elektronischen Recheneinrichtung eine weitere Übersichtstabelle erzeugt wird. Wie bereits erwähnt, kann dann die weitere Übersichtstabelle dazu genutzt werden zu ermitteln, wann die elektronische Recheneinrichtung Datenpakete an das Endgerät sendet. Ferner kann diese weiter Übersichtstabelle ebenfalls mit an das Endgerät übermittelt werden, so dass das Endgerät weiß, wann ein entsprechender Empfangskanal einzuschalten ist.

Dabei kann weiterhin vorgesehen sein, dass ein Datenpaket von der elektronischen Recheneinrichtung nur in dem ermittelten weiteren Zeitfenster gemäß der weiteren Übersichtstabelle an das Endgerät übertragen wird. Somit kann verhindert werden, dass Datenpakete von der elektronischen Recheneinrichtung an das Endgerät verloren gehen. Insbesondere kann somit ermittelt werden, wann das loT-Gerät das entsprechende Modem zu aktivieren hat, um entsprechende eingehende Nachrichten zu erwarten. Dieser Prozess ist dem Vorhersageprozess für die Sendeeinrichtung ebenfalls ähnlich. In diesem Fall werden die Datenpakete, die von der elektronischen Recheneinrichtung an das Endgerät gesendet werden, ebenfalls mit einem Zeitstempel für den Sendezeitpunkt sowie einen inkrementierenden Paketzähler versehen. Ähnlich wie auf der Seite der elektronischen Recheneinrichtung erstellt nun das Endgerät aus den eingehenden Datenpaketen die "Window Maps", die nun nicht mehr auf den eingeschränkten Geräten selbst verarbeitet, sondern an die elektronische Recheneinrichtung übertragen werden. Außerdem enthalten diese Window Maps die Kennung der empfangenen Pakete sowie den Zeitpunkt, zu dem die Pakete empfangen wurden. Nun ist der elektronischen Recheneinrichtung bekannt, zu welchen Zeiten welche Pakete das Endgerät erreicht haben und wann diese empfangen wurden.

Weiterhin vorteilhaft ist, wenn zusätzlich in Abhängigkeit von dem Zeitstempel eine Übertragungsverzögerung von der elektronischen Recheneinrichtung ermittelt wird. Insbesondere können somit auch Vorhersagen über die Übertragungsverzögerung getroffen werden, insbesondere vom Endgerät zur elektronischen Recheneinrichtung. Die elektronische Recheneinrichtung verwendet die Sende- und Ankunftszeiten, um abzuschätzen, wie lange die Nachricht vom Endgerät bis zur elektronischen Recheneinrichtung braucht. In ähnlicher Weise meldet das Endgerät zurück, wie lange verschiedene Nachrichten von der elektronischen Recheneinrichtung gebraucht haben, um das Endgerät zu erreichen. Auch hier können wiederum insbesondere lernfähige Algorithmen, beispielsweise Long-Short-Term-Memory-Modelle,verwendet werden, insbesondere wie bei den entsprechenden Verbindungsfenstern, um auf die Zeitreihen der Verzögerung an der elektronischen Recheneinrichtung trainiert zu werden. Anschließend wird der vorhergesagte Verlauf der Verzögerungen an das Endgerät übertragen, das wiederum die Tabelle verwenden kann, um die zukünftige Zeit zu schätzen, bis die Nachricht den Netzwerkrand beziehungsweise die elektronische Recheneinrichtung erreicht hat. Dies ist zum Beispiel für die Entscheidungsfindung bei der Verlagerung zeitkritischer Aufgaben an den Netzwerkrand beziehungsweise die elektronische Recheneinrichtung erforderlich beziehungsweise nützlich.

Bei dem vorgestellten Verfahren handelt es sich insbesondere zumindest in Teilen um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung daher auch ein computerlesbares Speichermedium mit zumindest dem Computerprogrammprodukt nach dem vorhergehenden Aspekt.

Ein nochmals weiterer Aspekt der Erfindung betrifft ein Netzwerksystem für ein störungsresistentes Netzwerk, mit zumindest einem Endgerät und einer elektronischen Recheneinrichtung, wobei das Netzwerksystem zum Durchführen eines Verfahrens nach dem vorhergehenden Aspekt ausgebildet ist. Insbesondere wird das Verfahren mittels des Netzwerksystems durchgeführt.

Vorteilhafte Ausgestaltungsformen des Verfahrens sind als vorteilhafte Ausgestaltungsformen des Computerprogrammprodukts, des computerlesbaren Speichermediums sowie des Netzwerksystems anzusehen. Das Netzwerksystem weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- Fig. 1: ein schematisches Blockschaltbild einer Ausführungsform eines Netzwerksystems;
- Fig. 2: ein schematisches Blockschaltbild zum Bestimmen eines Zeitfensters;
- Fig. 3: ein weiteres schematisches Blockschaltbild gemäß einer Ausführungsform eines Netzwerksystems; und
- Fig. 4: ein nochmals weiteres schematisches Blockschaltbild gemäß einer Ausführungsform eines Netzwerksystems.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

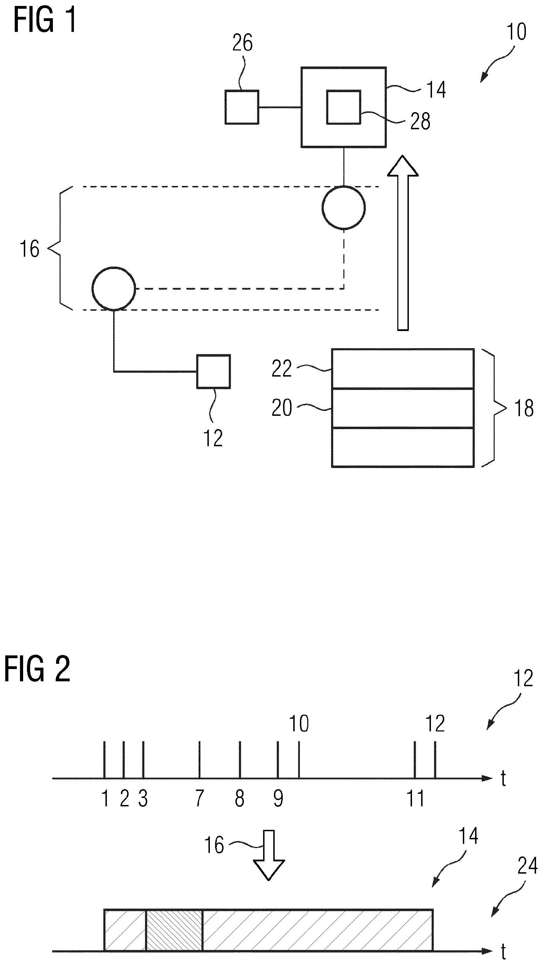

Fig. 1 zeigt ein schematisches Blockschaltbild gemäß einer Ausführungsform eines Netzwerksystems 10. Im vorliegenden Ausführungsbeispiel weist das Netzwerksystem 10 zumindest ein Endgerät 12 sowie eine elektronische Recheneinrichtung 14 auf. Das Endgerät 12 ist insbesondere als so genanntes loT (Internet of Things)-Gerät ausgebildet. Insbesondere kann das Endgerät 12 als so genanntes Industrial loT-Gerät ausgebildet sein. Die elektronische Recheneinrichtung 14 ist insbesondere als so genannte Edge Node bereitgestellt.

Das Netzwerksystem 10 ist insbesondere zum Betreiben eines störungsresistenten Netzwerks 16 ausgebildet. Gemäß einer Ausgestaltungsform des vorliegenden Verfahrens werden insbesondere eine Vielzahl von Datenpaketen 18 von dem Endgerät 12 zu der elektronischen Recheneinrichtung 14 über das störungsresistente Netzwerk 16 übertragen, wobei einem jeden Datenpaket 18 ein jeweiliger Zeitstempel 20 und eine jeweilige Paketnummer 22 zugeordnet wird. Es erfolgt das Empfangen von zumindest eines Teils der Vielzahl von übertragenen Datenpaketen 18 mittels der elektronischen Recheneinrichtung 14 und ein Ermitteln von nicht-empfangenen Datenpaketen 18 auf Basis der jeweiligen Paketnummer 22 mittels der elektronischen Recheneinrichtung 14. Es erfolgt dann das Ermitteln von zumindest einem Zeitfenster 24 (Fig. 2), in welchem die nicht-empfangenen Datenpakete 18 gesendet wurden, auf Basis der Zeitstempel 20 der empfangenen Datenpakete 18 mittels der elektronischen Recheneinrichtung 14. Es erfolgt dann das Erzeugen einer Informationsnachricht 26 mit dem zumindest einen ermittelten Zeitfenster 24 mittels der elektronischen Recheneinrichtung 14 und das Übertragen der Informationsnachricht 26 an das Endgerät 12 für ein zukünftiges Übertragen von Datenpaketen 18 über das störungsresistente Netzwerk 16 mittels der elektronischen Recheneinrichtung 14.

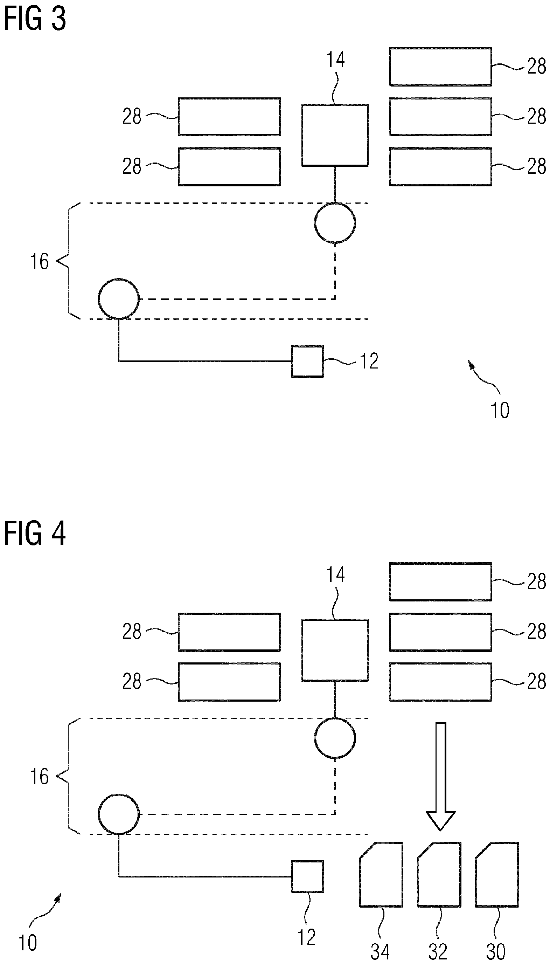

Dabei kann insbesondere vorgesehen sein, dass zukünftig Datenpakete 18 von dem Endgerät 12 zu der elektronischen Recheneinrichtung 14 im ermittelten Zeitfenster 24 übertragen werden. Ferner kann insbesondere die Informationsnachricht 26 mit einer Übersichtstabelle 30 (Fig. 3) über das zumindest eine ermittelte Zeitfenster 24 übertragen werden. Des Weiteren kann vorgesehen sein, dass die elektronische Recheneinrichtung 14 kontinuierlich Zeitfenster 24 ermittelt und die Informationsnachricht 26 kontinuierlich angepasst und an das Endgerät 12 übertragen wird.

Weiterhin kann vorgesehen sein, dass die Informationsnachricht 26 mittels eines lernfähigen Algorithmus der elektronischen Recheneinrichtung 14 erzeugt wird. Dabei kann der lernfähige Algorithmus insbesondere als neuronales Netzwerk 28 bereitgestellt werden. Ferner kann insbesondere vorgesehen sein, dass das neuronale Netzwerk 28 als Long-Short-Term-Memory-Algorithmus bereitgestellt wird. Es kann weiterhin vorgesehen sein, dass in Abhängigkeit von dem bestimmten Zeitfenster 24 eine Kommunikationseinrichtung des Endgeräts 12 deaktiviert wird.

Insbesondere zeigt somit die Fig. 1, dass das eingeschränkte Endgerät 12 und die Dienstinstanz, insbesondere die elektronische Recheneinrichtung 14, am Netzwerkrand bereitgestellt werden. Diese eingeschränkten Endgeräte 12 sind über das störungsresistente Netzwerk 16, welches insbesondere als Blackbox betrachtet werden kann, mit der elektronischen Recheneinrichtung 14 verbunden. Diese Verbindung ist in hohem Maße intermittierend und zu keinem Zeitpunkt kann eine direkte Verbindung zwischen dem eingeschränkten Endgerät 12 und dem Netzwerkrand, insbesondere der elektronischen Recheneinrichtung 14, bestehen, insbesondere bei so genannten verzögerungs- und unterbrechungstoleranten Netzwerken. Durch die Blackbox-Natur des störungsresistenten Netzwerks 16 ist der Prädiktionsansatz direkt mit fast allen Arten von Netzinfrastrukturen kompatibel.

Bei diesem Ansatz verwendet das Endgerät 12 Nachschlagetabellen, die von der elektronischen Recheneinrichtung 14 mit insbesondere Hilfe von Deep-Learning-Modellen erstellt werden. Insbesondere werden diese LSTM-basiert erstellt, um sich wiederholende Muster zu extrahieren, zum Beispiel Satelliten, die zur gleichen Zeit vorbeifliegen, Züge, die aufgrund von Fahrplänen ungefähr zur gleichen Zeit ankommen. Diese Nachschlagetabellen enthalten die nächsten geschätzten Starts von Verbindungsfenstern sowie deren Dauer. Dieser Vorhersageansatz ist voll kompatibel mit eingeschränkten Feldgeräten, da im Wesentlichen die gesamte Rechenarbeit in den Datenzentren, insbesondere der elektronischen Recheneinrichtung 14, am Netzrand oder im Netzkern geleistet wird.

Die Fig. 1 zeigt dabei insbesondere das von der elektronischen Recheneinrichtung 14 entfernte Endgerät 12 mit dem intermittierenden Netzwerk, beispielsweise Datenmules, Subcum, Katastrophenschutznetzwerk, oder eine Kombination aus diesen genannten Netzwerken, mit der elektronischen Recheneinrichtung 14. Wie bereits gesagt, wird das störungsresistente Netzwerk 16 als Blackbox behandelt.

Der Einfachheit halber ist im vorliegenden Ausführungsbeispiel lediglich ein Endgerät 12 gezeigt. Es ist selbstverständlich, dass auch weitere Endgeräte 12 über das störungsresistente Netzwerk 16 mit der elektronischen Recheneinrichtung 14 verbunden werden können.

In einem ersten Schritt versucht das Endgerät 12 in regelmäßigen Abständen Datenpakete 18 über das störungsresistente Netzwerk 16 abzuladen und sendet daher die entsprechenden Datenpakete 18 an die elektronische Recheneinrichtung 14. Diese Datenpakete 18 werden zusätzlich mit dem Zeitstempel 20 versehen, der insbesondere den lokalen Sendezeitpunkt des Datenpakets 18 beschreibt. Außerdem wird, falls nicht anders vorhanden, eine inkrementelle Paketnummer 22 angehängt. Diese Paketnummer 22 wird für jedes Datenpaket 18, das vom Endgerät 12 an die elektronische Recheneinrichtung 14 gesendet wird, inkrementiert.

Fig. 2 zeigt eine schematische Ansicht zum Erzeugen des Zeitfensters 24. Insbesondere ist im oberen Teil der Fig. 2 gezeigt, dass beispielsweise zwölf Datenpakete 18 von dem Endgerät 12 über das störungsresistente Netzwerk 16 an die elektronische Recheneinrichtung 14 gesendet werden. Im vorliegenden Ausführungsbeispiel kann beispielsweise gesehen werden, dass die Datenpakete 3, 4, 5, und 6 nicht empfangen wurden. Dadurch kann ein Zeitfenster 24 erzeugt werden. Insbesondere, da die Verbindung zwischen dem Endgerät 12 und der elektronischen Recheneinrichtung 14 nur sporadisch besteht, werden einige Datenpakete 18 ankommen, andere nicht. Alle ankommenden Paketnummern 22 werden gespeichert und auf der Seite der elektronischen Recheneinrichtung 14 wird insbesondere die so genannte Fensterkarte (Window Map) erstellt. Diese Karte stellt alle Intervalle dar, in denen es dem Endgerät 12 möglich war, erfolgreich Datenpakete 18 an die elektronische Recheneinrichtung 14 zu senden. Insbesondere aufgrund der oft asynchronen Natur von unterbrechungstoleranten Netzwerken bedeutet eine Verbindung von dem Endgerät 12 zur elektronischen Recheneinrichtung 14 nicht automatisch auch eine entsprechende Verbindung von der elektronischen Recheneinrichtung 14 zu dem Endgerät 12.

Im vorliegenden Ausführungsbeispiel ist beispielsweise gezeigt, dass die Datenpakete 1, 2, 3, 7, 8, 9, 10, 11 und 12 bei der elektronischen Recheneinrichtung 14 ankommen.

Fig. 3 zeigt ein weiteres schematisches Blockschaltbild gemäß einer Ausführungsform des Netzwerksystems 10. Vorliegend ist insbesondere dargestellt, dass das neuronale Netzwerk 28, insbesondere in diesem Fall LSTM-basiert, auf der Vielzahl von Datenpaketen 18 trainiert werden kann, um die nächsten Offline- und Online-Fenster vorherzusagen. Hierzu kann vorgesehen sein, dass auch unterschiedliche neuronale Netzwerke 28 bereitgestellt werden können. Diese vorhergesagten Zeitfenster 24 werden dann in einer Nachschlagetabelle gespeichert, die an das Endgerät 12 übertragen wird. Das Endgerät 12 kann nun diese Nachschlagetabelle verwenden, um Daten nur dann zu entladen, wenn eine hohe Wahrscheinlichkeit besteht, dass der Netzdienst diese Datenpakete 18 enthält.

Fig. 4 zeigt eine weitere schematische Ansicht einer Ausführungsform eines Netzwerksystems 10. Gemäß der Fig. 4 ist insbesondere gezeigt, dass eine weitere Vielzahl von Datenpaketen von der elektronischen Recheneinrichtung 14 an das Endgerät 12 über das störungsresistente Netzwerk 16 übertragen wird, wobei einem jeden weiteren Datenpaket ein jeweiliger weiterer Zeitstempel und eine jeweilige weitere Paketnummer mittels der elektronischen Recheneinrichtung 14 zugeordnet wird, wobei zumindest ein Teil der weiteren Vielzahl von übertragenen weiteren Datenpaketen mittels des Endgeräts 12 empfangen wird, wobei nicht-empfangene weitere Datenpakete auf Basis der jeweiligen weiteren Paketnummer mittels des Endgeräts 12 ermittelt werden, und wobei zumindest ein weiteres Zeitfenster, in welchem die nicht-empfangenen weiteren Datenpakete gesendet wurden, auf Basis der weiteren Zeitstempel der empfangenen weiteren Datenpakete mittels des Endgeräts 12 ermittelt wird.

Dabei kann insbesondere vorgesehen sein, dass zumindest das eine weitere Zeitfenster von dem Endgerät 12 an die elektronische Recheneinrichtung 14 übertragen wird und auf Basis dessen von der elektronischen Recheneinrichtung 14 eine weitere Übersichtstabelle 32 erzeugt wird. Ebenfalls kann ein Datenpaket 18 von der elektronischen Recheneinrichtung 14 nur in dem ermittelten weiteren Zeitfenster gemäß der weiteren Übersichtstabelle 32 an das Endgerät 12 übertragen werden.

Ferner zeigt die Fig. 4, dass zusätzlich in Abhängigkeit von dem Zeitstempel 22 eine Übertragungsverzögerung 34 von der elektronischen Recheneinrichtung 14 ermittelt werden kann.

Insbesondere kann somit aus Sicht des Endgeräts 12 auch ermittelt werden, wann ein entsprechendes Modem zu aktivieren ist, um auf eingehende Datenpakete 18 zu warten. Dieser Prozess ist dem Vorhersageprozess für die Sendeeinrichtung, insbesondere vom Endgerät 12 zur elektronischen Recheneinrichtung 14, ähnlich. In diesem Fall werden die Datenpakete 18, die von der elektronischen Recheneinrichtung 14 an das Endgerät 12 gesendet werden, ebenfalls mit dem weiteren Zeitstempel für den Sendezeitpunkt sowie einen weiteren inkrementierenden Paketzähler versehen. Ähnlich wie auf der Seite der elektronischen Recheneinrichtung 14 erstellt auch das Endgerät 12 aus den eingehenden Datenpaketen 18 das weitere Zeitfenster, die nun nicht mehr auf den eingeschränkten Endgeräten 12 selbst verarbeitet, sondern an den Netzwerkrand, insbesondere die elektronische Recheneinrichtung 14 übertragen werden. Außerdem enthalten diese Karten die Kennung der empfangenen Datenpakete 18 sowie den Zeitpunkt, zu dem die Datenpakete 18 empfangen wurden. Nun ist der elektronischen Recheneinrichtung 14 bekannt, zu welchem Zeitpunkt welche Pakete das Endgerät 12 erreicht haben und wann diese empfangen wurden.

Zu diesem Zeitpunkt werden insbesondere zwei zusätzliche LSTM-basierte neuronale Netzwerke 28 am Netzrand, insbesondere der elektronischen Recheneinrichtung 14, trainiert, um die erfolgreichen Empfangszeiten und Sendezeiten insbesondere von der elektronischen Recheneinrichtung 14 zum Endgerät 12, vorherzusagen. Das Sendenetzwerk verbleibt am Netzwerkrand und wird zur Vorhersage verwendet, wann neue Datenpakete 18 an das Endgerät 12 gesendet werden können. Das empfangende Netzwerk erstellt wiederum eine Nachschlagetabelle, insbesondere die zweite Übersichtstabelle 32, die an das Endgerät 12 übertragen wird. Diese Tabelle kann nun vom Endgerät 12 genutzt werden, um wahrscheinliche Ankunftszeiten zukünftiger Datenpakete 18 zu ermitteln und im optimalen Fall zum Beispiel Energie zu sparen.

Ferner können in ähnlicher Weise auch Vorhersagen über die Übertragungsverzögerung 34 getroffen werden. Die elektronische Recheneinrichtung 14 verwendet die Sende- und Ankunftszeiten, um abzuschätzen, wie lange das Datenpaket 18 vom Endgerät 12 bis zur elektronischen Recheneinrichtung 14 braucht. In ähnlicher Weise meldet das Endgerät 12 zurück, wie lange verschiedene Datenpakete 18 von der elektronischen Recheneinrichtung 14 gebraucht haben, um das Endgerät 12 zu erreichen. Auch hier werden insbesondere zwei LSTM-basierte Modelle, wie bei den entsprechenden Verbindungsfenstern, auf die Zeitreihen der Verzögerung an der elektronischen Recheneinrichtung 14 trainiert. Anschließend wird der vorhergesagte Verlauf der Verzögerungen, insbesondere vom Endgerät 12 zur elektronischen Recheneinrichtung 14 an das Endgerät 12 übertragen, das diese Tabelle verwenden kann, um die künftige Zeit zu schätzen, bis das Datenpaket 18 die elektronische Recheneinrichtung 14 erreicht hat. Dies ist zum Beispiel für die Entscheidungsfindung bei der Verlagerung zeitkritischer Aufgaben an die elektronische Recheneinrichtung 14 erforderlich beziehungsweise nützlich.

Insbesondere ist für die Schätzung der Verzögerung eine Form der Zeitsynchronisierung zwischen der elektronischen Recheneinrichtung 14 und dem Endgerät 12 erforderlich.

Es sei an dieser Stelle noch erwähnt, dass natürlich Datenpakete 18 nicht nur gemäß diesen Schätzungen für Verbindungsfenster und Verzögerungen gesendet werden. Andernfalls wäre das Netzwerksystem 10 nicht in der Lage, sich an neue Online-Fenster anzupassen, die in vorhergesagten "Offline-Phasen" auftauchen. Zur weiteren Erkundung potentieller neuer Verbindungsfenster muss eine Art "Erkundung" bestehen bleiben, was beispielsweise derart durchgeführt werden kann, indem Datenpakete 18 zu zufälligen Zeiten gesendet werden, auch wenn diese Offline vorhergesagt wurden. Daher gibt es beispielsweise auch einen Kompromiss zwischen den Erkundungen und den Paketverlustraten.

Insbesondere die Schätzung von Netzwerkverzögerungen und -auslastungen durch neuronale Netzwerke 28 oder genauer gesagt durch die Long-Short-Term-Memory-basierten Netze ist bereits ein sehr gut bekanntes Gebiet. Effizientes Daten-Offloading mit Verbindungsvorhersage und Verzögerungsvorhersage, insbesondere mit intermittierenden Netzen, ist jedoch noch nicht bekannt. Insbesondere wo andere spezielle Routing-Algorithmen verwenden oder die Netzwerktopologie kennen müssen, werden externe Datenquellen benötigt, während die hier gezeigte Lösung keinerlei Wissen über das Innenleben des Netzes und auch keine externe Information für den Vorhersageprozess benötigt. Außerdem muss der entsprechende Algorithmus auf dem eingeschränkten Endgerät 12 und an der elektronischen Recheneinrichtung 14 hinzugefügt beziehungsweise geändert werden. Jede Netzwerklösung in dem störungsresistenten Netzwerk 16 kann gleichbleiben. Außerdem ist auf dem eingeschränkten Endgerät 12 kein stromintensives Training oder eine Inferenz von den neuronalen Netzwerken 28 erforderlich.

Insgesamt kann somit realisiert werden, dass eine bidirektionale Vorhersage von Verbindungsfenstern/Verzögerungen in den störungsresistenten Netzwerken 16 oder anderen emittierenden Netzwerken, für das Endgerät 12 mit den Long-Short-Term-Memory-basierten Modellen ohne Vorwissen über die inneren Abläufe des Netzwerks realisiert werden kann. Ferner kann eine energie- und ressourceneffiziente Vorhersage von Verbindungsfenstern/Verzögerungen, zum Beispiel die Auslage von Aufgaben, ermöglichen.

## Patentansprüche

1. Verfahren zum Betreiben eines störungsresistenten Netzwerks (16) zwischen einer elektronischen Recheneinrichtung (14) und einem Endgerät (12) mittels eines Netzwerksystems (10), mit den Schritten:
- Übertragen einer Vielzahl von Datenpaketen (18) von dem Endgerät (12) zu der elektronischen Recheneinrichtung (14) über das störungsresistente Netzwerk (16), wobei einem jeden Datenpaket (18) ein jeweiliger Zeitstempel (20) und eine jeweilige Paketnummer (22) mittels des Endgeräts (12) zugeordnet wird;
- Empfangen zumindest eines Teils der Vielzahl von übertragenen Datenpaketen (18) mittels der elektronischen Recheneinrichtung (14);
- Ermitteln von nicht-empfangenen Datenpaketen (18) auf Basis der jeweiligen Paketnummer (22) mittels der elektronischen Recheneinrichtung (14);
- Ermitteln von zumindest einem Zeitfenster (24), in welchem die nicht-empfangenen Datenpakte (18) gesendet wurden, auf Basis der Zeitstempel (20) der empfangenen Datenpakete (18) mittels der elektronischen Recheneinrichtung (14);
- Erzeugen einer Informationsnachricht (26) mit dem zumindest einem ermittelten Zeitfenster (24) mittels der elektronischen Recheneinrichtung (14); und
- Übertragen der der Informationsnachricht (26) an das Endgerät (12) für ein zukünftiges Übertragen von Datenpaketen (18) über das störungsresistente Netzwerk (16) mittels der elektronischen Recheneinrichtung (14).

2. Verfahren nach Anspruch 1, **dadurch gekennzeichnet, dass**
zukünftig Datenpakete (18) von dem Endgerät (12) zur der elektronischen Recheneinrichtung (14) in dem ermittelten Zeitfenster (24) übertragen werden.

3. Verfahren nach Anspruch 1 oder 2, **dadurch gekennzeichnet, dass**
die Informationsnachricht (26) mit einer Übersichtstabelle (30) über das zumindest eine ermittelte Zeitfenster (24) übertragen wird.

4. Verfahren nach einem der vorhergehenden Ansprüche, **dadurch gekennzeichnet, dass** die elektronische Recheneinrichtung (14) kontinuierlich Zeitfenster (24) ermittelt und die Informationsnachricht (26) kontinuierlich angepasst und an das Endgerät (12) übertragen wird.

5. Verfahren nach einem der vorhergehenden Ansprüche, **dadurch gekennzeichnet, dass** die Informationsnachricht (26) mittels eines lernfähigen Algorithmus der elektronischen Recheneinrichtung (14) erzeugt wird.

6. Verfahren nach Anspruch 5, **dadurch gekennzeichnet, dass**
der lernfähige Algorithmus als neuronales Netzwerk (28) bereitgestellt wird.

7. Verfahren nach Anspruch 6, **dadurch gekennzeichnet, dass**
das neuronale Netzwerk (28) als Long-Short-Term-Memory-Algorithmus bereitgestellt wird.

8. Verfahren nach einem der vorhergehenden Ansprüche, **dadurch gekennzeichnet, dass** in Abhängigkeit von dem bestimmten Zeitfenster (24) eine Kommunikationseinrichtung des Endgeräts (12) deaktiviert wird.

9. Verfahren nach einem der vorhergehenden Ansprüche, **dadurch gekennzeichnet, dass** eine weitere Vielzahl von weiteren Datenpaketen von der elektronischen Recheneinrichtung (14) an das Endgerät (12) über das störungsresistente Netzwerk (16) übertragen wird, wobei einem jeden weiteren Datenpaket ein jeweiliger weiterer Zeitstempel und eine jeweilige weitere Paketnummer mittels der elektronischen Recheneinrichtung (14) zugeordnet wird, wobei zumindest ein Teil der weiteren Vielzahl von übertragenen weiteren Datenpaketen mittels des Endgeräts (12) empfangen wird, wobei nicht-empfangene weitere Datenpakete auf Basis der jeweiligen weiteren Paketnummer mittels des Endgeräts (12) ermittelt werden, und wobei zumindest ein weiteres Zeitfenster, in welchem die nicht-empfangenen weiteren Datenpakte gesendet wurden, auf Basis der weiteren Zeitstempel der empfangenen weiteren Datenpakete mittels des Endgeräts (12) ermittelt wird.

10. Verfahren nach Anspruch 9, **dadurch gekennzeichnet, dass**
das zumindest eine weitere Zeitfenster von dem Endgerät (12) an die elektronische Recheneinrichtung (14) übertragen wird und auf Basis dessen von der elektronischen Recheneinrichtung (14) eine weitere Übersichtstabelle (32) erzeugt wird.

11. Verfahren nach Anspruch 10, **dadurch gekennzeichnet, dass**
ein weiteres Datenpaket von der elektronischen Recheneinrichtung (14) nur in dem ermittelten weiteren Zeitfenster gemäß der weiteren Übersichtstabelle (32) an das Endgerät (12) übertragen wird.

12. Verfahren nach einem der vorhergehenden Ansprüche, **dadurch gekennzeichnet, dass** zusätzlich in Abhängigkeit von dem Zeitstempel (20) eine Übertragungsverzögerung (34) von der elektronischen Recheneinrichtung (14) ermittelt wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Netzwerksystem (10) für ein störungsresistentes Netzwerk (16), mit zumindest einem Endgerät (12) und einer elektronischen Recheneinrichtung (14), wobei das Netzwerksystem (10) zum Durchführen eines Verfahrens nach einem der Ansprüche 1 bis 12 ausgebildet ist.
